# EUROPÄISCHE PATENTSCHRIFT

(11) **EP 2 897 820 B1**
(45) Veröffentlichungstag und Bekanntmachung des Hinweises auf die Patenterteilung: **30.11.2016**
(21) Anmeldenummer: 13765741.7
(22) Anmeldetag: 20.09.2013
(51) Int. Cl.: B60G 15/14, B60G 15/06, B60G 17/048, F16F 9/32, F16F 9/05

(54) **LUFTFEDERSYSTEM MIT EINER DICHTUNGSANORDNUNG**
AIR SPRING SYSTEM WITH A SEAL ARRANGEMENT
SYSTEME DE RESSORT PNEUMATIQUE AVEC UN DISPOSITIF D'ETANCHEITE

(30) Priorität: 21.09.2012 DE 102012108930
(43) Veröffentlichungstag der Anmeldung: 29.07.2015
(73) Patentinhaber: KNORR-BREMSE Systeme für Nutzfahrzeuge GmbH, 80809 München (DE)
(72) Erfinder: KANTOR, Kornel, H-6000 Kecskemét (HU); TANCZOS, Miklos, H-6000 Kecskemet (HU)
(86) Internationale Anmeldenummer: PCT/EP2013/069619
(87) Internationale Veröffentlichungsnummer: WO 2014/044819

(56) Entgegenhaltungen:
- DE-A1- 19 959 839
- DE-A1-102010 026 236
- DE-B3- 10 215 492
- DE-C1- 10 037 026
- DE-U1- 8 413 300
- GB-A- 1 012 982

## Beschreibung

Die vorliegende Erfindung betrifft eine Dichtungsanordnung für ein Luftfedersystem zum Abdichten eines in einem Abrollrohr und einem Außenrohr befindlichen Stoßdämpfers, wobei das Luftfedersystem mindestens ein integriertes Steuerventil zur Beaufschlagung einer zwischen dem Außenrohr, dem Abrollrohr und einem diese verbindenden Luftfederbalg gebildeten Druckkammer mit Druckluft aufweist, wobei ferner die Dichtungsanordnung zwischen einer Innenumfangsfläche des Abrollrohres und einer Außenumfangsfläche des Stoßdämpfers und/oder zwischen einer Innenumfangsfläche des Außenrohres und der Außenumfangsfläche des Stoßdämpfers angeordnet ist.

Das Einsatzgebiet der Erfindung erstreckt sich vornehmlich auf die Fahrzeugtechnik. Im Bereich des Fahrwerks von Nutzfahrzeugen kommen beispielsweise Schwingungsdämpfer zum Einsatz, die ein meist hydraulisches Dämpfungselement und eine hiermit zusammenwirkende Luftfedersystem umfassen. Im Sinne einer integrierten Bauweise weist das Dämpfungselement üblicherweise ein Behälterrohr auf, welches mit einem Abrollrohr der Luftfeder verbunden ist, wobei das Abrollrohr über einen als Rollbalg wirkenden Luftfederbalg mit einem konzentrisch und relativ zum Abrollrohr axial beweglich angeordneten Außenrohr verbunden ist. Der Luftfederbalg, das Abrollrohr sowie das Außenrohr begrenzen eine unter Luftdruck zur Federung stehende Druckkammer.

Bei Luftfedersystemen, mit einer einen Stoßdämpfer umfassenden Luftfeder, ist es immer kritisch, eine Dichtheit zwischen dem Stoßdämpfer und einem Außenrohr bzw. einem Abrollrohr zu sichern.

### HINTERGRUND DER ERFINDUNG

Eine allgemein bekannte Lösung zum Abdichten eines in einem Abrollrohr und einem Außenrohr befindlichen Stoßdämpfers ist eine in der Bohrung des Abrollrohres ausgebildete Ringnut, die mindestens ein Dichtungselement aufnimmt. Nachteil der Lösung ist, dass die Ringnut nur durch nachträgliche Drehbearbeitung des üblicherweise als Kunststoffspritzteil hergestellten Abrollrohres ausgebildet werden kann, wodurch sich die Bearbeitungszeit pro Bauteil erhöht. Eine derartige Lösung ist unter anderem in der Druckschrift DE 10 2010 012 346 A1 in Figur 1 dargestellt.

Aus der Druckschrift EP 1 262 341 B1 geht ein Federbein, umfassend einen Stoßdämpfer, der ein Außenrohr und eine Kolbenstange, sowie eine Stangenführungsanordnung enthält, hervor. Die Stangenführungsanordnung umfasst eine Stangendichtanordnung, die eine ringförmige Scheibe mit einer Mehrzahl von damit verbundenen Dichtungen aufweist. Die ringförmige Scheibe ist in einem oberen Abschnitt der Stangenführung aufgenommen. Ferner umfasst das Federbein eine Elastomerdichtung, die zwischen dem Stoßdämpfer und dem Luftfederkolben zum Abdichten der abgedichteten Kammer angeordnet ist. Die Elastomerdichtung ist zwischen einer ringförmigen Scheibe der Stoßdämpferstangendichtanordnung und dem sich radial nach innen erstreckenden Flansch des Luftfederkolbens angeordnet. Gemäß einer bevorzugten Ausführungsform umfasst das Federbein eine ringförmige Metallplatte, die mit der Elastomerdichtung verbunden ist. Die ringförmige Metallplatte ist derart ausgebildet, dass sie mit dem Luftfederkolben zusammenpasst, um die Elastomerdichtung zwischen dem radial sich nach innen erstreckenden Flansch des Luftfederkolbens und den Flanschabschnitt des Außenrohrs des Stoßdämpfers zu positionieren.

Ferner geht aus der DE 102 15 492 B3 eine Dichtungsanordnung für ein Luftfedersystem zum Abdichten eines ersten geschlossenen Druckraums eines Dämpfers, der ein erstes hydraulisches Medium und eine in diesen verschieblich geführte Kolbenstange enthält, gegen einen zweiten geschlossenen Druckraum eines Federbalges mit einem zweiten gasförmigen Druckmedium hervor. Das erste und das zweite Druckmedium beaufschlagen einen mit mindestens einem Vorspannelement vorgespannten Dichtungsring über einen abzudichtenden Spalt zwischen den konzentrisch gegeneinander beweglichen Dämpfer und dessen Kolbenstange mit Druck. Zwischen dem zweiten Druckraum und einem im Dämpfer angeordneten Nutraum, in den die Dichtungsanordnung mit dem Dichtungsring und dem mindestens einen Vorspannelement angeordnet ist, ist eine drucktechnische Verbindung im Bereich der Vorspannelemente in einem Nutgrund und/oder mindestens einer Nutflanke vorgesehen. Ferner sind der Dichtungsring und das mindestens eine Vorspannelement derart aufeinander abgestimmt, dass unabhängig von der Druckhöhe des ersten und zweiten Druckmediums, die Kontaktpressungsverteilung des Dichtungsrings an dem unmittelbar über eine oder mehrere Dichtungskanten anliegenden Maschinenbauteil konstant bleibt. Vorzugsweise besteht das mindestens eine Vorspannelement aus zwei elastischen Spannringen.

Darüber hinaus geht aus der Druckschrift DE 10 2010 026 236 A1 , die als nächstliegender Stand der Technik betrachtet wird, eine pneumatische Aufhängung mit einem Zylinderkörper und einen mit einer Kolbenstange versehenen Kolben hervor. Dabei bilden der Kolben und der Zylinderkörper einen Zylinder. Der Zylinderkörper durchquert einen Aufhängungskörper, wobei eine Dichtung zwischen dem Aufhängungskörper und dem Zylinderkörper angeordnet ist. Der Zylinderkörper und die Dichtung gewährleisten ein Versperren und ein Abdichten einer Öffnung des Aufhängungskörpers. Die Dichtung in der Öffnung des Aufhängungskörpers ist zwischen einer Schulter des Aufhängungskörpers und einem elastischen Ring untergebracht, der gegen einer radialen Kante des Aufhängungskörpers angeordnet ist. Die Schulter des Aufhängungskörpers und der gegen die radiale Kante angeordnete elastische Ring bilden einen Dichtungssitz. Dieser Dichtungssitz wird ohne Bearbeitung des Aufhängungskörpers erhalten. Damit fallen zwar Bearbeitungsschritte aus, jedoch werden spezielle Werkzeuge benötigt. Ferner enthält die pneumatische Aufhängung eine auf den elastischen Ring drückende und mit der Kolbenstange in Verbindung stehende Feder, damit der Eintritt der Kolbenstange in den Zylinderkörper die Feder komprimiert.

Die DE 100 37 026 C1 offenbart ein Luftfederbein, bestehend aus einem auf einem Abrollmantel abrollbaren Rollbalg, einem innerhalb des Rollbalges und/oder des Abrollmantels angeordneten hydraulischen Schwingungsdämpfer mit einer in diesen oszillierend eintauchenden Kolbenstange und einem oberen und einem unteren, mit Dichtungen versehenen Abschluss- und Befestigungsteil. Als Dichtungen werden O-Ringe verwendet, die in einem jeweils einseitig axial und radial offenen Rücksprung eines ersten Bauteils liegen, sich radial am zweiten Bauteil abstützen und axial über einen mit dem ersten Bauteil verbundenen Ring gehalten und/oder verspannt sind. Der die O-Ring-Dichtung haltende Ring ist ein- oder mehrfach radial geteilt ausgebildet und greift als Schnapp-Rast-Verbindung in eine umlaufende Nut des ersten Bauteils ein.

### OFFENBARUNG DER ERFINDUNG

Es ist daher die Aufgabe der vorliegenden Erfindung eine Dichtungsanordnung für ein Luftfedersystem zu schaffen, die die Dichtheit zwischen einem Stoßdämpfer und einem Abrollrohr, aber auch die Dichtheit zwischen dem Stoßdämpfer und einem Außenrohr gewährleistet, wobei die Produktion und die Montage der Dichtungsanordnung am Luftfedersystem verbessert werden soll.

Die Aufgabe wird ausgehend von einem Luftfedersystem gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß ist ein an einer Außenumfangsfläche stufenförmig ausgebildeter Stützring an einem distalen Ende des Abrollrohres und/oder an einem distalen Ende des Außenrohres angeordnet. Der Stufenring dringt dabei teilweise in das Abrollrohr und/oder in das Außenrohr ein. Ein demgegenüber geringerer Anteil des Stufenrings ist außerhalb des Abrollrohres und/oder außerhalb des Außenrohres angeordnet. Es ist denkbar den Stützring nur an dem Außenrohr oder nur an dem Abrollrohr anzuordnen, besonders vorteilhaft ist es aber den Stützring sowohl an dem Außenrohr als auch an dem Abrollrohr anzuordnen.

Besonders bevorzugt ist, dass der Stützring aus einem metallischen Werkstoff ausgebildet ist. Ein metallischer Stützring weist den Vorteil einer, gegenüber einem aus einem Polymer bestehenden Stützring, höheren Festigkeit und Verschleißbeständigkeit auf. Besonders vorteilhaft ist die Wahl eines Leichtmetalls, wie insbesondere Aluminium, wodurch eine Gewichtseinsparung realisierbar ist.

Die Erfindung schließt die technische Lehre ein, dass der Stützring stoffschlüssig mit dem Abrollrohr und/oder dem Außenrohr verbunden ist. Insbesondere bietet sich hierbei eine Schweiß- oder Klebeverbindung an.

Vorzugsweise umfasst das distale Ende des Abrollrohres und/oder das distale Ende des Außenrohres an der Innenumfangsfläche einen für die Aufnahme des Stützringes ausgebildeten Aufnahmebereich, welcher einen größeren Innendurchmesser als ein umliegender Bereich aufweist, wobei eine Zunahme des Innendurchmessers sprunghaft ist, wodurch die Ausbildung einer Schulter hervorgeht. Der Aufnahmebereich wird fertigungstechnisch über ein Aufbohren des distalen Endes des Abrollrohres und/oder des distalen Endes des Außenrohres hergestellt. Es ist jedoch auch denkbar das Abrollrohr und/oder das Außenrohr direkt urformtechnisch mit dem Aufnahmebereich herzustellen. Die sprunghafte Zunahme des Innendurchmessers des Abrollrohres und/oder des Außenrohres erfolgt aufgrund einer scharfen Kante, die vorzugsweise senkrecht zur Innenumfangsfläche verläuft. Dadurch bildet sich die Schulter zwischen dem einen größeren Innendurchmesser aufweisenden Aufnahmebereich und demgegenüber einen kleineren Innendurchmesser aufweisenden umliegender Bereich aus.

Gemäß einem bevorzugten Ausführungsbeispiel ist ein Dichtungselement axial zwischen einer Stirnfläche des Stützringes und der Schulter angeordnet. Das Dichtungselement ist an einer Außenumfangsfläche des Stoßdämpfers angeordnet und befindet sich in dem Aufnahmebereich. Vorteilhafterweise ist das Dichtungselement ein O-Ring.

Gemäß einem weiteren bevorzugten Ausführungsbeispiel ist zwischen dem Dichtungselement und der Stirnfläche des Stützringes eine Ringscheibe angeordnet. Die Ringscheibe kommt sowohl am Stützring als auch an dem Dichtungselement zur Anlage und sichert dadurch die Position des Dichtungselements.

Vorzugsweise weist der Stützring mindestens zwei Stufenflächen auf, wobei die eine Stufenfläche als Stützfläche für das Abrollrohr oder das Außenrohr dient und die andere Stufenfläche als Stützfläche für das Dichtungselement oder die Ringscheibe dient. Die als Stützfläche für das Abrollrohr oder das Außenrohr dienende Stufenfläche fixiert den Stützring am Abrollrohr oder am Außenrohr. Vorteilhafterweise erfolgt an dieser Stützfläche die stoffschlüssige Verbindung. Die als Stützfläche für das Dichtungselement oder die Ringscheibe dienende Stufenfläche realisiert eine axiale Positionierung des Dichtungselements oder der Ringscheibe.

Des Weiteren bevorzugt ist, dass die Ringscheibe schwimmend zwischen der Außenumfangsfläche des Stoßdämpfers und der Innenumfangsfläche des Abrollrohres oder schwimmend zwischen der Außenumfangsfläche des Stoßdämpfers und der Innenumfangsfläche des Außenrohres gelagert ist. Daher ist die Ringscheibe derart ausgebildet, dass sie mit loser Toleranz zu der Außenumfangsfläche des Stoßdämpfers, aber auch mit loser Toleranz zu der Innenumfangsfläche des Abrollrohres oder zu der Innenumfangsfläche des Außenrohres angeordnet ist. Durch die Toleranzen werden Spannungen in der Ringscheibe verhindert und eine axiale Bewegung der Ringscheibe entlang der Außenumfangsfläche des Stoßdämpfers gefördert.
Es wird weiterhin vorgeschlagen, dass die Ringscheibe aus einem metallischen Werkstoff besteht und eine dem Dichtungselement zugeordnete Stirnfläche der Ringscheibe plangeschliffen ist. Eine metallische Ringscheibe weist eine höhere Verschleißbeständigkeit und höhere Festigkeit als eine aus einem Polymer hergestellte Ringscheibe auf. Ferner ermöglicht die plangeschliffene Stirnfläche einen optimalen Kontakt und dadurch eine optimale Abdichtung zwischen Ringscheibe und Dichtungselement.

Die Erfindung schließt die technische Lehre ein, dass die als Stützfläche für das Dichtungselement dienende Stirnfläche des Stützringes plangeschliffen ist. Die plangeschliffene Stirnfläche ermöglicht in diesem Fall ebenso einen optimalen Kontakt sowie eine optimale Abdichtung zwischen Stützring und Dichtungselement.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig.1: einen teilweise Längsschnitt durch ein Luftfedersystem mit einer erfindungsgemäßen Dichtungsanordnung,
- Fig.2: eine vergrößerte Längsschnitt-Darstellung durch ein Luftfedersystem mit einer erfindungsgemäßen Dichtungsanordnung gemäß eines ersten bevorzugten Ausführungsbeispiels.

### DETAILLIERTE BESCHREIBUNG EINER BEVORZUGTEN AUSFÜHRUNGSFORM

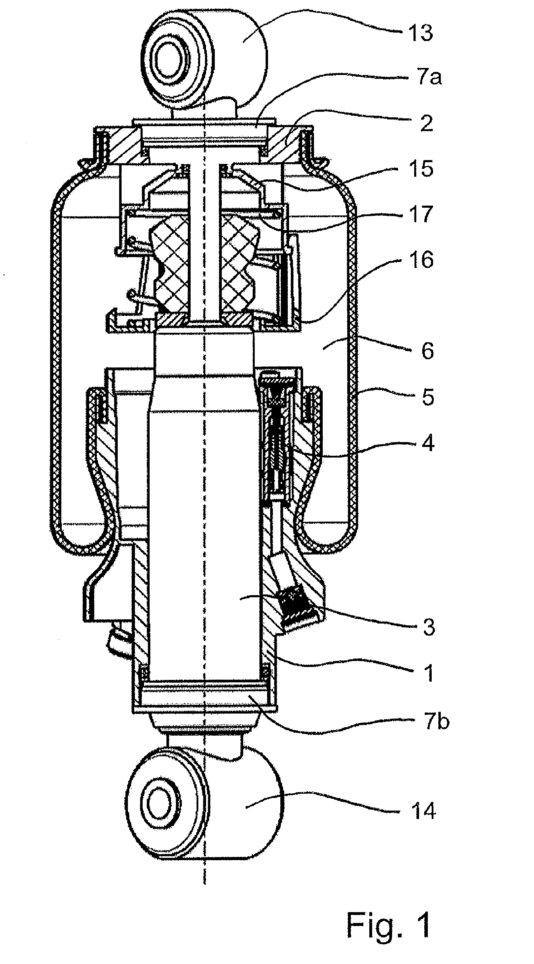

Das Luftfedersystem nach Figur 1 besteht im Wesentlichen aus einem Außenrohr 2 mit einer oberen Befestigungsöse 13, welchem ein Abrollrohr 1 mit einer zugeordneten unterer Befestigungsöse 14 gegenüberliegt. Die untere Befestigungsöse 14 ist Bestandteil eines hydraulischen Stoßdämpfers 3, welcher koaxial von dem Außenrohr 2 und dem Abrollrohr 1 umgeben ist. Die obere Befestigungsöse 13 ist mit einer Kolbenstange des Stoßdämpfers 3 verbunden. Zwischen dem Außenrohr 2 und dem Abrollrohr 1 verläuft ein Luftfederbalg 5 aus einem Elastomermaterial, der sich an der Außenoberfläche des Abrollrohres 1 je nach Luftfederhub abrollt. Von dem Außenrohr 2, dem Abrollrohr 1 sowie dem Luftfederbalg 5 wird eine Druckkammer 6 gebildet, die mit Druckluft beaufschlagt die Luftfederfunktion des Luftfedersystems erfüllt. Zur Druckbeaufschlagung der Druckkammer 6 ist ein an einer Innenumfangsfläche des Abrollrohres 1 angeordnetes Steuerventil 4 vorgesehen. Ferner bildet ein koaxial am Außenrohr 2 angeformtes Rohroberteil 15 gemeinsam mit einem Rohrunterteil 16 und einer dazwischen angeordneten und vorgespannten Druckfeder 17 eine Teleskopanordnung.

Jeweils ein an einer Außenumfangsfläche stufenförmig ausgebildeter metallischer Stützring 7a und 7b ist mit einem distalen Ende des Abrollrohres 1 und mit einem distalen Ende des Außenrohres 2 stoffschlüssig verbunden. Das distale Ende des Abrollrohres 1 und das distale Ende des Außenrohres 2 weisen an der Innenumfangsfläche einen für die Aufnahme der Stützringe 7a und 7b ausgebildeten Aufnahmebereich 8 auf. Dieser hat einen größeren Innendurchmesser als ein umliegender Bereich, wodurch die Ausbildung einer Schulter 9 hervorgeht.

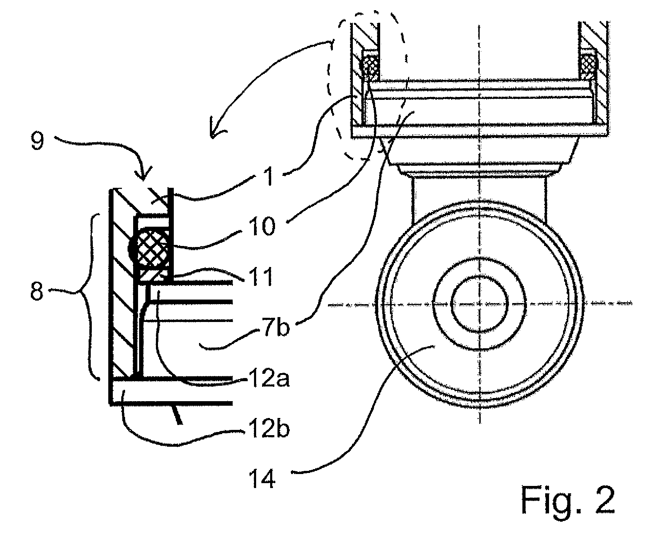

Gemäß Figur 2, welche eine vergrößerte Darstellung des unteren Bereichs von Figur 1 zeigt, ist ein Dichtungselement 10 in Form eines O-Rings an einer Außenumfangsfläche des Stoßdämpfers 3 angeordnet. Das Dichtungselement 10 wird durch eine axial an einer Stirnfläche des Stützringes 7b angeordnete Ringscheibe 11 fixiert. Der Stützring 7b weist zwei Stufenflächen 12a und 12b auf, wobei die eine Stufenfläche 12b als Stützfläche für das Abrollrohr 1 dient und die andere Stufenfläche 12a als Stützfläche für die Ringscheibe 11 dient. Die nebenstehende Figur stellt eine vergrößerte Darstellung der nur teilweise dargestellten Dichtungsanordnung dar.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, anstelle eines O-Rings ein anderes Dichtungselement 10 an die Außenumfangsfläche des Stoßdämpfers 3 anzuordnen, welches die Funktion einer sicheren Abdichtung gewährleistet.

Ergänzend ist daraufhinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Abrollrohr
- 2: Außenrohr
- 3: Stoßdämpfers
- 4: Steuerventil
- 5: Luftfederbalg
- 6: Druckkammer
- 7a, 7b: Stützring
- 8: Aufnahmebereich
- 9: Schulter
- 10: Dichtungselement
- 11: Ringscheibe
- 12a, 12b: Stufenfläche
- 13: obere Befestigungsöse
- 14: unterer Befestigungsöse
- 15: Rohroberteil
- 16: Rohrunterteil
- 17: Druckfeder

## Patentansprüche

1. Luftfedersystem mit einer Dichtungsanordnung zum Abdichten eines in einem Abrollrohr (1) und einem Außenrohr (2) befindlichen Stoßdämpfers (3), wobei das Luftfedersystem mindestens ein Steuerventil (4) zur Beaufschlagung einer zwischen dem Außenrohr (2), dem Abrollrohr (1) und einem diese verbindenden Luftfederbalg (5) gebildeten Druckkammer (6) mit Druckluft aufweist, wobei ferner die Dichtungsanordnung zwischen einer Innenumfangsfläche des Abrollrohres (1) und einer Außenumfangsfläche des Stoßdämpfers (3) und/oder zwischen einer Innenumfangsfläche des Außenrohres (2) und der Außenumfangsfläche des Stoßdämpfers (3) angeordnet ist, wobei ein an einer Außenumfangsfläche stufenförmig ausgebildeter Stützring (7) an einem distalen Ende des Abrollrohres (1) und/oder an einem distalen Ende des Außenrohres (2) angeordnet ist,
**dadurch gekennzeichnet, dass** das distale Ende des Abrollrohres (1) und/oder das distale Ende des Außenrohres (2) an der Innenumfangsfläche einen für die Aufnahme des Stützringes (7) ausgebildeten Aufnahmebereich (8) umfasst, welcher einen größeren Innendurchmesser als ein umliegender Bereich aufweist, wobei eine Zunahme des Innendurchmessers sprunghaft ist, wodurch die Ausbildung einer Schulter (9) hervorgeht, wobei ein Dichtungselement (10) axial zwischen einer Stirnfläche des Stützringes (7) und der Schulter (9) angeordnet ist und wobei zwischen dem Dichtungselement (10) und der Stirnfläche des Stützringes (7) eine Ringscheibe (11) angeordnet ist.

2. Luftfedersystem nach Anspruch 1,
**dadurch gekennzeichnet, dass** der Stützring (7) aus einem metallischen oder einem polymeren Werkstoff ausgebildet ist.

3. Luftfedersystem nach Anspruch 1,
**dadurch gekennzeichnet, dass** der Stützring (7) stoffschlüssig mit dem Stoßdämpfer verbunden ist.

4. Luftfedersystem nach Anspruch 1,
**dadurch gekennzeichnet, dass** der Stützring (7) mindestens zwei Stufenflächen (12a, 12b) aufweist, wobei die eine Stufenfläche (12b) als Stützfläche für das Abrollrohr (1) oder das Außenrohr (2) dient und die andere Stufenfläche (12a) als Stützfläche für das Dichtungselement (10) oder die Ringscheibe (11) dient.

5. Luftfedersystem nach Anspruch 1,
**dadurch gekennzeichnet, dass** die Ringscheibe (11) schwimmend zwischen der Außenumfangsfläche des Stoßdämpfers (3) und der Innenumfangsfläche des Abrollrohres (1) oder schwimmend zwischen der Außenumfangsfläche des Stoßdämpfers (3) und der Innenumfangsfläche des Außenrohres (2) gelagert ist.

6. Luftfedersystem nach Anspruch 1,
**dadurch gekennzeichnet, dass** die Ringscheibe (11) aus einem metallischen oder einem polymeren Werkstoff besteht und eine dem Dichtungselement (10) zugeordnete Stirnfläche der Ringscheibe (11) plangeschliffen ist.

7. Luftfedersystem nach Anspruch 1,
**dadurch gekennzeichnet, dass** die als Stützfläche für das Dichtungselement (10) dienende Stirnfläche des Stützringes (7) plangeschliffen ist.

## Claims

1. Air spring system with a seal arrangement for sealing a shock absorber (3) which is situated in a pedestal tube (1) and an outer tube (2), the air spring system having at least one control valve (4) for charging a pressure chamber (6) with compressed air, which pressure chamber (6) is formed between the outer tube (2), the pedestal tube (1) and an air bellows (5) which connects them, the seal arrangement being arranged, furthermore, between an inner circumferential surface of the pedestal tube (1) and an outer circumferential surface of the shock absorber (3) and/or between an inner circumferential surface of the outer tube (2) and the outer circumferential surface of the shock absorber (3), a supporting ring (7) which is of step-shaped configuration on an outer circumferential surface being arranged at a distal end of the pedestal tube (1) and/or at a distal end of the outer tube (2),
**characterised in that** the distal end of the pedestal tube (1) and/or the distal end of the outer tube (2) comprises, on the inner circumferential surface, a receiving region (8) which is configured for receiving the supporting ring (7) and has a greater internal diameter than a surrounding region, an increase in the internal diameter being sudden, as a result of which the formation of a shoulder (9) arises, a seal element (10) being arranged axially between an end face of the supporting ring (7) and the shoulder (9), and an annular disc (11) being arranged between the seal element (10) and the end face of the supporting ring (7).

2. Air spring system according to claim 1,
**characterised in that** the supporting ring (7) is configured from a metallic or a polymeric material.

3. Air spring system according to claim 1,
**characterised in that** the supporting ring (7) is joined to the shock absorber by adhesive force.

4. Air spring system according to claim 1,
**characterised in that** the supporting ring (7) has at least two step faces (12a, 12b), one step face (12b) serving as a supporting surface for the pedestal tube (1) or the outer tube (2) and the other step face (12a) serving as a supporting surface for the seal element (10) or the annular disc (11).

5. Air spring system according to claim 1,
**characterised in that** the annular disc (11) is mounted in a floating manner between the outer circumferential surface of the shock absorber (3) and the inner circumferential surface of the rolling tube (1) or in a floating manner between the outer circumferential surface of the shock absorber (3) and the inner circumferential surface of the outer tube (2).

6. Air spring system according to claim 1,
**characterised in that** the annular disc (11) is configured from a metallic or a polymeric material, and **in that** an end face of the annular disc (11) which is assigned to the seal element (10) is surface-ground.

7. Air spring system according to claim 1,
**characterised in that** the end face of the supporting ring (7) which serves as a supporting face of the seal element (10) is surface-ground.

## Revendications

1. Système de ressort pneumatique ayant un agencement d'étanchéité pour rendre étanche un amortisseur (3) de choc se trouvant dans un tube (1) de roulement et un tube (2) extérieur, le système de ressort pneumatique ayant au moins une soupape (4) de commande pour alimenter en air une chambre (6) de pression formée entre le tube (2) extérieur, le tube (1) de roulement et un soufflet (5) à air les reliant, dans lequel, en outre, l'agencement d'étanchéité est disposé entre une surface périphérique intérieure du tube (1) de roulement et une surface périphérique extérieure de l'amortisseur (3) de choc et/ou entre une surface périphérique intérieure du tube (2) extérieur et la surface périphérique extérieure de l'amortisseur (3) de choc, une rondelle (7) constituée en forme d'échelon sur une surface périphérique extérieure étant mise à une extrémité distale du tube (1) de roulement et/ou à une extrémité distale du tube (2) extérieur,
**caractérisé en ce que** l'extrémité distale du tube (1) de roulement et/ou l'extrémité distale du tube (2) extérieur comprend, sur la surface périphérique intérieure, une région (8) de réception, qui est constituée pour la réception de la rondelle (7) et qui a un diamètre intérieur plus grand qu'une région alentour, une augmentation du diamètre intérieur étant brusque, ce qui se traduit par la constitution d'un épaulement (9), un élément (10) d'étanchéité étant mis axialement entre une surface frontale de la rondelle (7) et l'épaulement (9) et un disque (11) annulaire étant mis entre l'élément (10) d'étanchéité et la surface frontale de la rondelle (7).

2. Système de ressort pneumatique suivant la revendication 1, **caractérisé en ce que** la rondelle (7) est en un matériau métallique ou en un matériau polymère.

3. Système de ressort pneumatique suivant la revendication 1, **caractérisé en ce que** la rondelle (7) est reliée à coopération de matière à l'amortisseur de choc.

4. Système de ressort pneumatique suivant la revendication 1, **caractérisé en ce que** la rondelle (7) a au moins deux surfaces (12a, 12b) d'échelon, l'une des surfaces (12b) d'échelon servant de surface d'appui au tube (1) de roulement ou au tube (2) extérieur et l'autre surface (12a) d'échelon de surface d'appui à l'élément (10) d'étanchéité ou au disque (11) annulaire.

5. Système de ressort pneumatique suivant la revendication 1, **caractérisé en ce que** le disque (11) annulaire est monté flottant entre la surface périphérique extérieure de l'amortisseur (3) de choc et la surface périphérique intérieure du tube (1) de roulement ou flottant entre la surface périphérique extérieure de l'amortisseur (3) de choc et la surface périphérique intérieure du tube (2) extérieure.

6. Système de ressort pneumatique suivant la revendication 1, **caractérisé en ce que** le disque (11) annulaire est en un matériau métallique ou en un matériau polymère et une surface frontale, associée à l'élément (10) d'étanchéité, du disque (11) annulaire est rectifiée.

7. Système de ressort pneumatique suivant la revendication 1, **caractérisé en ce que** la surface frontale de la rondelle (7) servant de surface d'appui de l'élément (10) d'étanchéité est rectifiée.
